# EUROPEAN PATENT SPECIFICATION

(11) **EP 0 438 057 B1**
(45) Date of publication and mention of the grant of the patent: **23.10.1996**
(21) Application number: 91100079.2
(22) Date of filing: 02.01.1991
(51) Int. Cl.: G06K 11/08

(54) **Infrared touch input device and light emitter activation circuit**
Infrarotberührungsempfindliche Eingabevorrichtung und Lichterzeugeraktivierungsschaltung
Dispositif d'entrée tactile à infrarouges et circuit d'activation de l'émetteur de lumière

(30) Priority: 16.01.1990 US 465837
(43) Date of publication of application: 24.07.1991
(73) Proprietor: CARROLL TOUCH INCORPORATED, Round Rock Texas 78664 (US)
(72) Inventor: Bartlett, Alan Leigh, New Braunfelf, Texas 78132 (US)
(74) Representative: Klunker . Schmitt-Nilson . Hirsch

(56) References cited:
- EP-A- 0 135 391
- US-A- 4 761 637
- PATENT ABSTRACTS OF JAPAN, vol. 13, no. 270 (E-776)[3618], 21st June 1989; & JP-A-1 60 259 (NIPPON DENSO CO., LTD) 07-03-1989
- IBM TECHNICAL DISCLOSURE BULLETIN, vol. 30, no. 11, April 1988, pages 107-109, Armonk, NY, US; "Touch sensitive device for display"

## Description

This invention relates to a touch entry system for detecting the presence of an element in an irradiated field and, more particularly, to a touch input device, for use in a touch entry system for detecting the intrusion and relative location of an element present within an irradiated field generally adjacent to an electronic display, in which the irradiated field is formed by a plurality of light emitters and light detectors.

Along with the continued and increasing use of video displays has been the problem of the operator/ machine interface. Traditionally, control of displayed information or cursors has been via the use of a keyboard. More recently, however, a number of devices allow an operator to directly interact with a video display. These devices have included light pens, desk-type mouse controllers, or touch input devices, such as switch matrixes or opto-electronic matrices. While switch-type overlays, placed adjacent to a video display, are generally inexpensive to apply and to utilize, they are also susceptible to contact wear as well as the distortion of the video information which is presented to the viewer or operator, particularly in situations involving a high degree of use. Opto-electronic matrix schemes utilizing light which is generally in the infrared region, however, create a matrix which is invisible to the viewer or operator and, therefore, do not distort the video information displayed and is not subject to wear in high use environments. Systems utilizing opto-matrix frames are well known in the art. An example of such a system includes US-A-4,267,443 US-A-4,761,637 discloses a touch input device having individually addressable emitters and detectors in separate arrays.

Normally touch input devices employ a voltage source of five volts in order to support the logic normally used to perform the various functions in a touch input device. It is one of the objects of this invention to improve the activation of a plurality of light emitters using only a single five volt source. Whereas conventional touch input devices have individually addressable emitters such as LEDs, in which a five volt source provides the energy used to drive not only each emitter but also series elements consisting of a current source and a current sink used in addressing each individual emitter. Therefore it is the object of this invention to provide a current source having sufficient energy to drive the high resistance LED and addressing circuitry using only a single five volt voltage source for the touch input device. It is also an object of this invention to provide a suitable driving current for the LED without increasing the electrical noise in the touch input system. If a conventional charge pump type device or transformer means were employed in a touch input system, this would generate electrical noise which would complicate the detection of light beams.

With conventional infrared touch input systems, the use of a single five volt source with a light emitting diode and a source driver and a sink driver, it is not always possible to generate sufficient light from each of the multiple light emitting diodes used in a touch input device. The voltage drops across the sink and source drivers and across selected LEDs will in some cases be greater than average thus leading to a low signal output from that LED. This factor is largely due to the variations in the saturation voltages of the source and sink devices and the electrical performance of light emitting diodes manufactured using current technology. This factor greatly complicates the manufacture of a touch input system, particularly when a large number of LEDs are employed in the touch input system. At present, a touch input system using a single five volt energy source must be constructed and tested to determine if the light energy emitted by each light emitting diode is sufficient for detection by each associated photodetector. With current technology, many light emitting diodes driven from a five volt source possess adequate output for use in a infrared touch input system.

From Patent Abstract of Japan, Volume 13, No. 270(E-776) [3618] - June 21, 1989 a charge pumpe type booster circuit has come to be known. This document discloses an output stage constituting a booster circuit comprising first and second PNP/NPN switching transistors. A capacitor is connected to a joint node between the first and the second transistor and is charged by a power source through a first diode while discharged through a second diode. A voltage boosted through charge/discharge of the capacitor is provided across a second capacitor at the output terminal. When taking out booster voltage, base signals are fed from a timing circuit to repective bases of the first and second transistors so as to carry out switch control alternatively.

It is therefore an object of this invention to provide a touch input device in which additional current can be supplied to each light emitting device using a single five volt power source, so that each light emitting diode or other light emitting element will supply sufficient light for detection by light detectors spaced at the opposite end of an irradiated display surface.

It is another object of this invention to provide a generally stable current so that the current through each LED is normalized to reduce variations in current through the various LEDs in the indicvidually addressable matrix. Therefore the light levels around the LED matrix tend to be more constant.

Another object of this invention is to provide a touch input system in which each LED does not have to be driven by a current which would otherwise be necessary to drive the lowest light output LED of the matrix, thus increasing the light emitted by the LEDs which have inherently better performance. Such excessive light can cause problems in the operation of a touch input system. Using excessive current to drive LEDs also results in degradation of individual LEDs over time.

These objects are solved according to the invention by a touch input device exhibiting the features set out in claim 1. Dependent claims 2 to 9 exhibit improvements of the subject-matter of claim 1.

The touch input device which is related to the invention is used to detect the presence of an opaque element, such as a stylus or an operator's finger, within an irradiated display area, such as the display or a CRT used as an output for a computer. Such a touch input device would employ light emitting devices, such as LEDs and light detecting devices, such as photodetectors, disposed along the sides of the display area. These light emitting elements may be disposed preferably along two sides of a frame and the light detecting elements would be disposed on the opposite two sides of the frame around the periphery of the output display. This touch input device would include a voltage source suitable for driving the logic used in the touch input device. This voltage source would also supply the current to activate individual light emitting elements. These light emitting elements would be sequentially activated so that light beams would traverse the display area and the light from each light emitting diode would be incident upon an aligned photo detector, such as a photo transistor. The activation circuitry for the LEDs comprise a charge pump between the voltage source and the sequential activation means in the light emitting device circuitry. The energy storage capacitor is comprised of two parallel capacitors to increase the total energy available. A switching means is used to alternatively connect the negative side of the LED energy storage capacitors to the return side of the 5V energy source during the time interval between sequential activation of light emitting elements and to the positive side of the 5V energy source during the activation time of the light emitting element. A pedestal voltage comprised of the supply voltage is thus established on a negative side of the capacitor upon activation of each light emitting element so that the voltage on the positive side of the capacitor is greater than the supply voltage of the voltage source during activation of each light emitting element. Thus adequate current through each light emitting device can be supplied to ensure that the light emitted from each light emitting element exceeds a minimum threshold necessary for satisfactory operation of the touch input device. Since switching occurs synchronously with activation of the light emitting element, no electrical noise is generated during the detection period which occurs while the light emitting element is active.

The invention is especially adapted to a touch input device which employs a plurality of light emitting elements configured in an array or matrix with source driver and sink driver means used to individually address specific LEDs for sequential activation.

An embodiment of the present invention will now be described by way of example with reference to the accompanying drawings, in which:

FIGURE 1 shows the manner in which an operator interfaces directly with a visual display when a touch input device employing the present invention is employed.

FIGURE 2 shows the manner in which light emitting devices such as light emitting diodes and light detecting devices, in this case phototransistors, are disposed around the periphery of a visual display or irradiated field.

FIGURE 3 is a diagram of the basic subassemblies of the light emitter activation circuitry.

FIGURE 4 is a view of the basic input/output from the controller for this system.

FIGURE 5 is a detailed schematic of the charge pump portion of the light emitter activation circuitry.

FIGURE 6 is a detailed schematic of the counter portion of the light emitter activation circuitry.

FIGURE 7 is a view of the source driver portion of the circuitry.

FIGURE 8 is a schematic showing the light emitting element or LED matrix for an X-array or matrix.

FIGURE 9 is a detailed schematic of the sink driver portion of the light emitter activation circuitry.

FIGURE 10 is a timing device showing the levels of the LED\, LCLK, and the MODE signals during the activation of a single light emitting element.

FIGURE 11 is a schematic of the voltage on the positive side of a capacitor used in the charge pump portion of the light emitter activation circuitry.

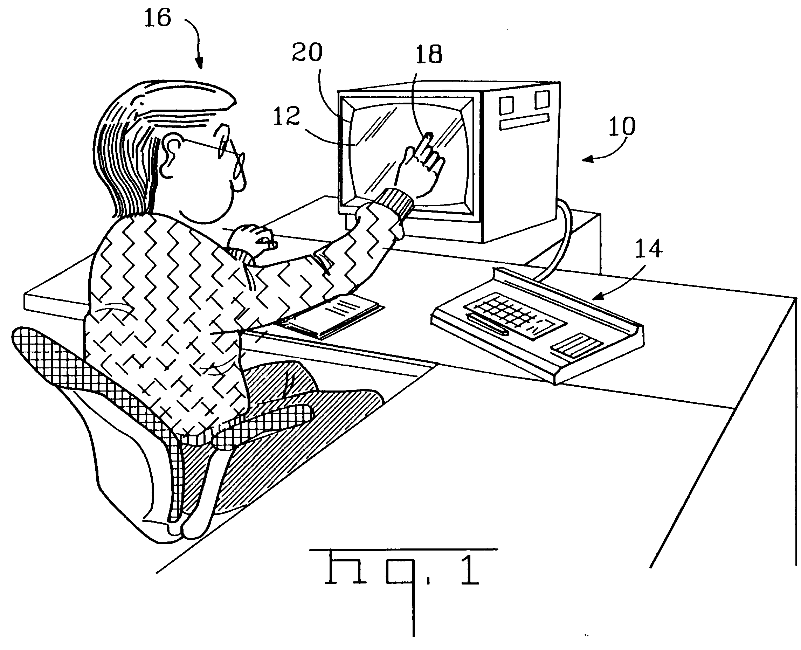

Figure 1 depicts the manner in which an operator can interact directly with information displayed on a CRT used in conjunction with a host computer such as a personal computer. The preferred embodiment of this invention is intended to provide real time inputs to a personal computer. As such, this device comprises means for transmitting real time input information directly to the host computer. It should be understood, however, that this invention could be adapted to process input information which could then be input to the host computer through an RS232 interface in a conventional manner.

As shown in Figure 1, an operator 16 can interact through a CRT 10 displaying information on a screen 12 simply by directly touching specific locations on the screen 12. Infrared light emitting diodes and detectors, such as phototransistors, could be mounted in a bezel or frame 20 located on the periphery of the display area 12 in a conventional manner such that a plurality of infrared beams would scan the display area 12. When the operator would place his or her finger 18 at a specific location on the display area 12, one or more infrared beams, extending between aligned emitters and detectors, would be interrupted. The unique location of the operator's finger 18 would then be transmitted to the host computer. More generally, this invention provides a means by which an opaque element, such as the operator's finger 18 or other styli, could be detected when disposed within an irradiated field, such as the display screen 12, formed by positioning light emitting devices, such as phototransistors, around the periphery of the irradiated field with the individual light emitting devices being aligned with corresponding individual light detecting devices.

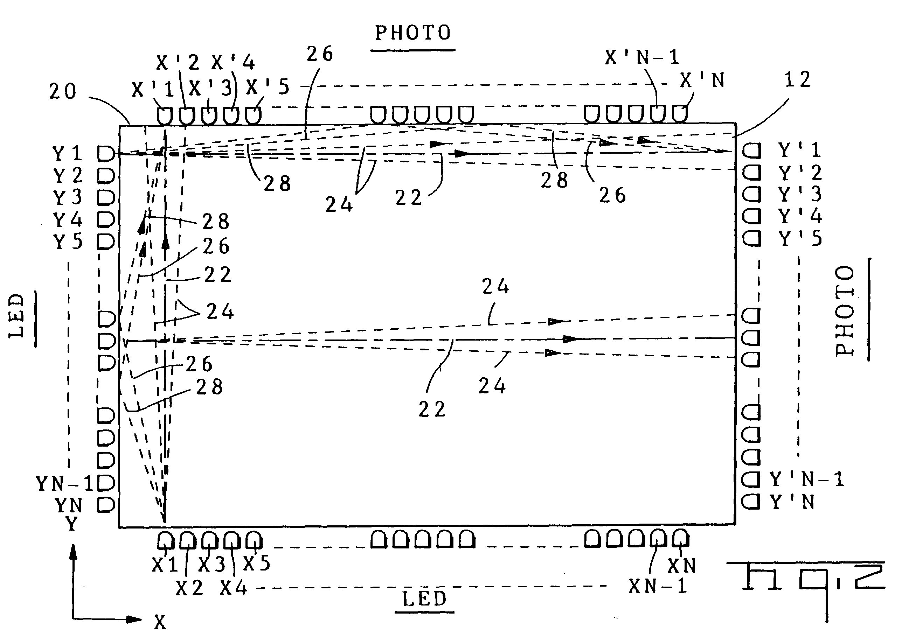

Figure 2 shows arrays of light emitting devices and arrays of light detecting devices disposed around the periphery of an irradiated field 12. A touch input device, as depicted herein, when used with the display of a CRT, would be configured in this manner, with two orthogonal arrays of light emitting devices and two orthogonal arrays of photodetectors disposed along the sides of a rectangular display area 12. Light emitting diodes and phototransistors are commonly used for such touch input systems, although it should be understood that other light emitting devices and light detecting devices could be suitably employed. As shown here, a Y array of light emitting diodes (LEDs), Y1 through YN, are located along the left of the frame 20 surrounding the display area or irradiated field 12. A similar array of light emitting diodes, X1 through XN, is located along the bottom of the frame 20. Arrays of phototransistors, X'1 through X'N, located along the top of the frame 20 and Y'1 through Y'N located along the right side of frame 20 are disposed such that individual corresponding LEDs and phototransistors, such as X1-X'1 and X2-X'2 and Y1-Y'1 and Y2-Y'2, are aligned. Thus, when light is emitted by an individual light emitting device, such as X1, this light will be incident upon a corresponding aligned phototransistor X'1. Figure 2 shows, however, that the light emitted by individual LEDs or other light emitting devices is incident not only upon the corresponding aligned photodetector but is also incident upon adjacent photodetectors. Note that while the light emitted along centerline 22 between emitter-detector pairs X1-X'1 will be incident on detector X'1, light emitted along line 24, within the dispersion angle of conventional light emitting devices, will be incident upon adjacent phototransistor X'2. Light indicated at 26 and 28 might also be incident upon sides of the frame 20 causing certain glare and reflection problems in practical touch input systems. A common method of ensuring that light emitted by a given light emitting device, X1, is detected only by the corresponding light detecting device or phototransistor, X'1, and not by an adjacent light detecting device such as X'2, is to sequentially activate light emitting devices and sequentially scan the arrays of phototransistors. In other words, when a given light emitting device is activated and emits light, only the aligned phototransistor is activated, although the adjacent phototransistors are illuminated. Thus, activation of light emitting diode X1 would occur at the same time that phototransistor X'1 is activated to detect incident light. The adjacent phototransistor X'2, upon which light from LED X1 would also be incident, would not be turned on during the interval in which LED X1 is activated. Note that this sequential and synchronized activation of light emitting diodes and phototransistors permits accurate detection of the presence of an opaque element positioned between aligned LEDs and phototransistors. The light from an adjacent LED, which is not blocked by an opaque element disposed in the field, will activate a "blocked" phototransistor simply because that LED will not be turned on during the activation interval of the "blocked" phototransistor. This sequential activation of light emitting devices and light detecting devices is achieved by conventional multiplexing techniques with scan rates of about twenty scans per second.

In the preferred embodiment of this invention both the light emitting elements and the light detecting elements are located in a matrix and are individually addressable. Although this invention is especially important in a touch input system using individually addressable light emitting elements, it should be understood that it could also be employed in a touch input device in which a plurality of light emitting elements are activated at the same time. The light emitter activation circuitry will be described in detail herein. The specific light detector activation circuitry employed to detect the presence or absence of light beams emitted by associated or corresponding light emitting elements, does not comprise an element of this invention, and it should be understood that any of a number of suitable detector configurations can be employed. U.S. Patent 4,761,637 shows an individually addressable light detector activation circuit which could be employed by this invention.

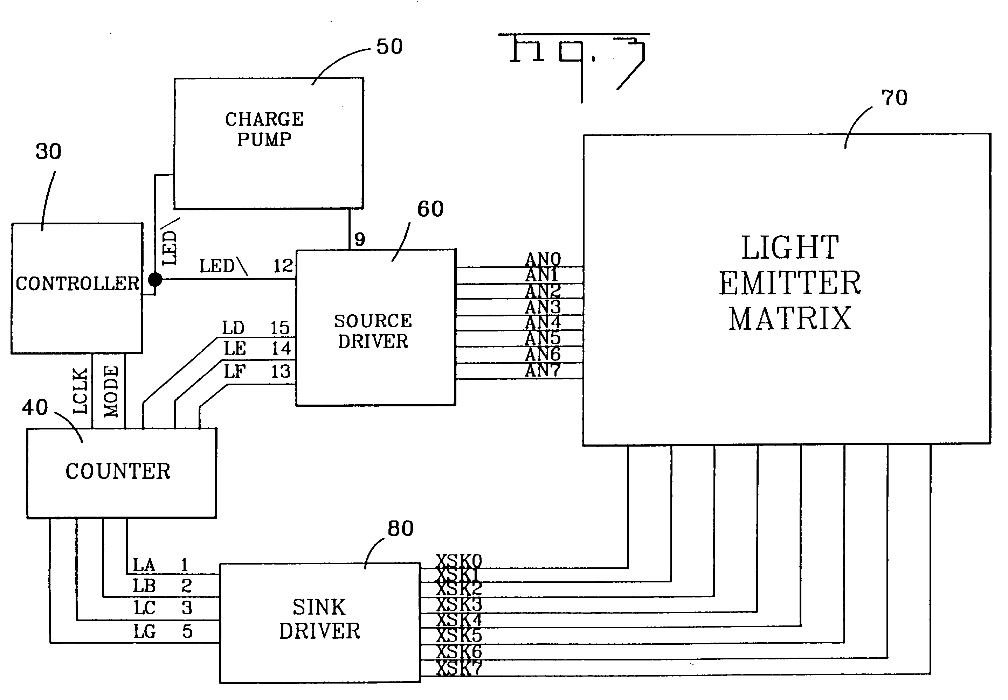

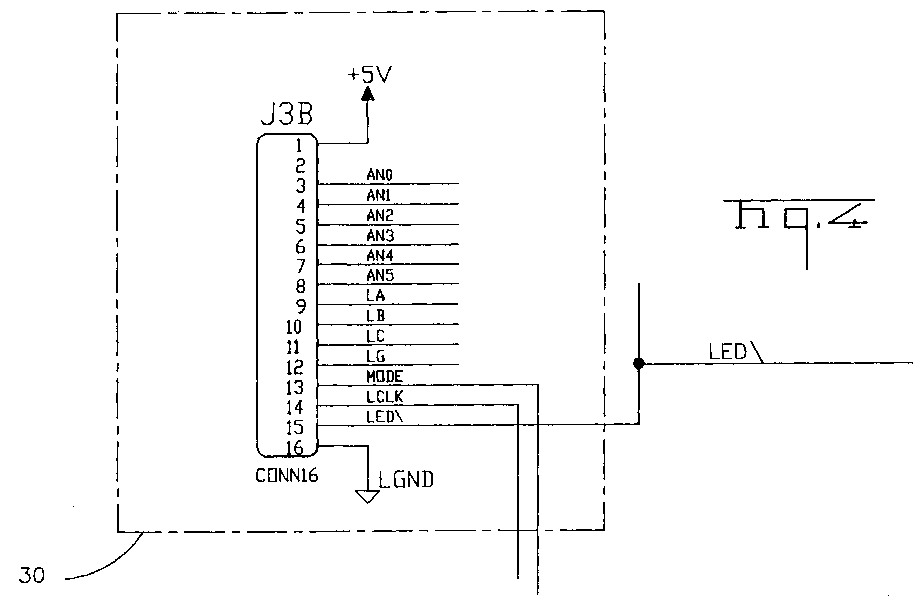

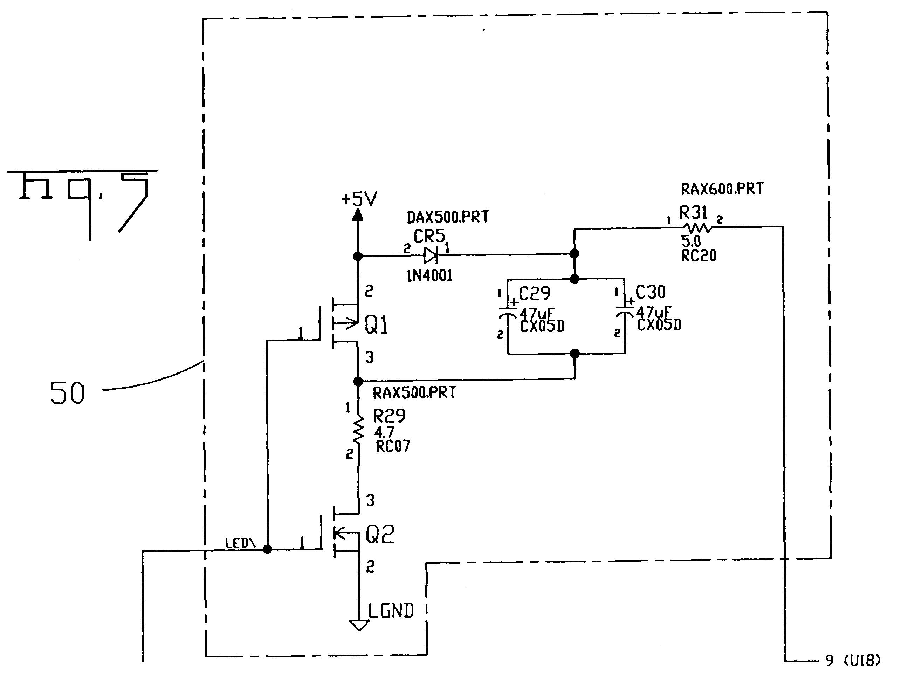

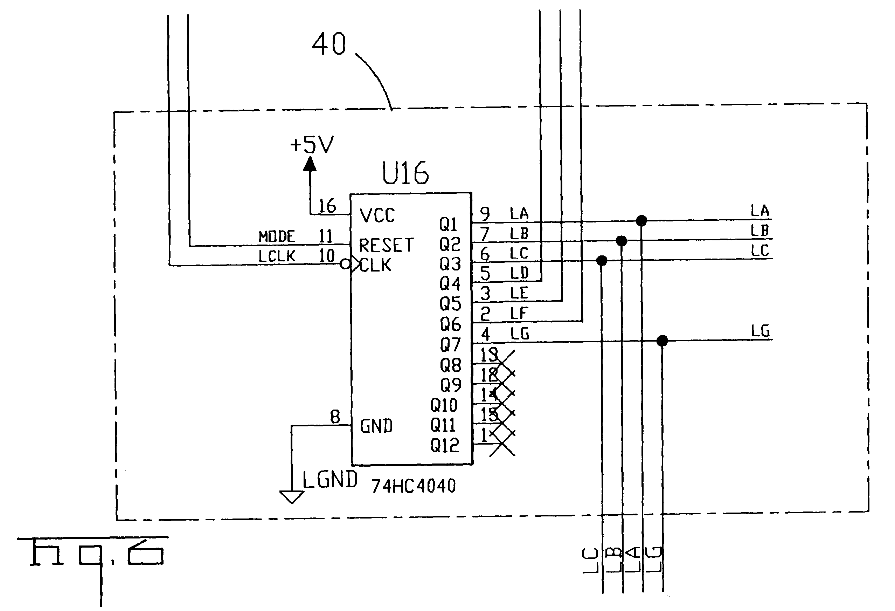

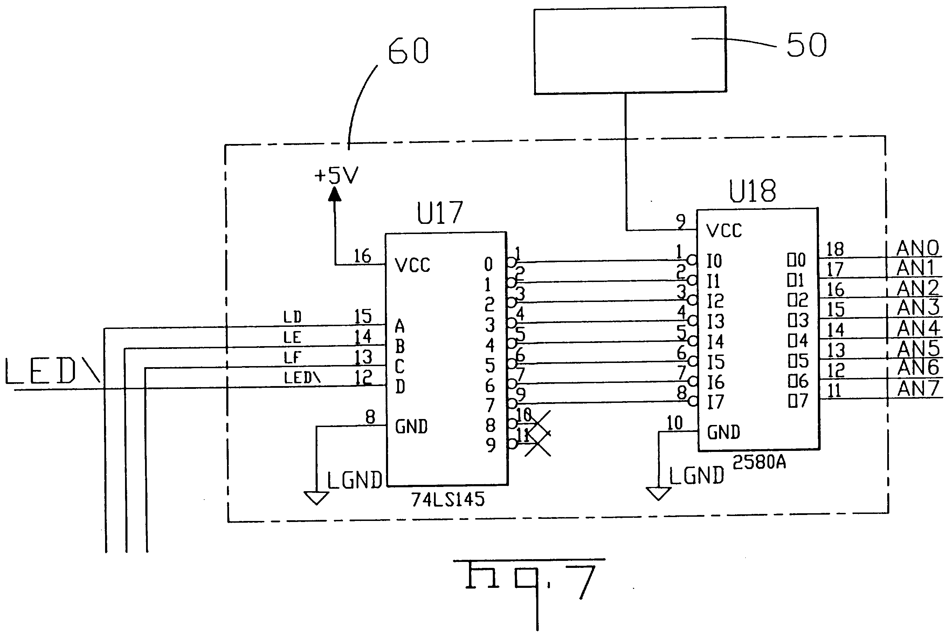

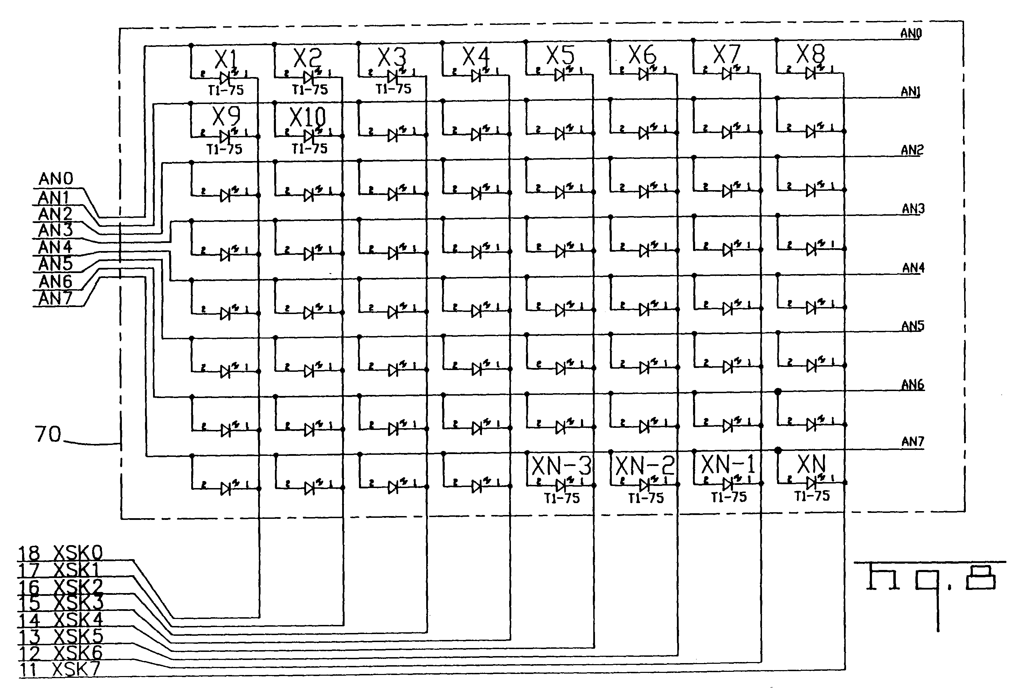

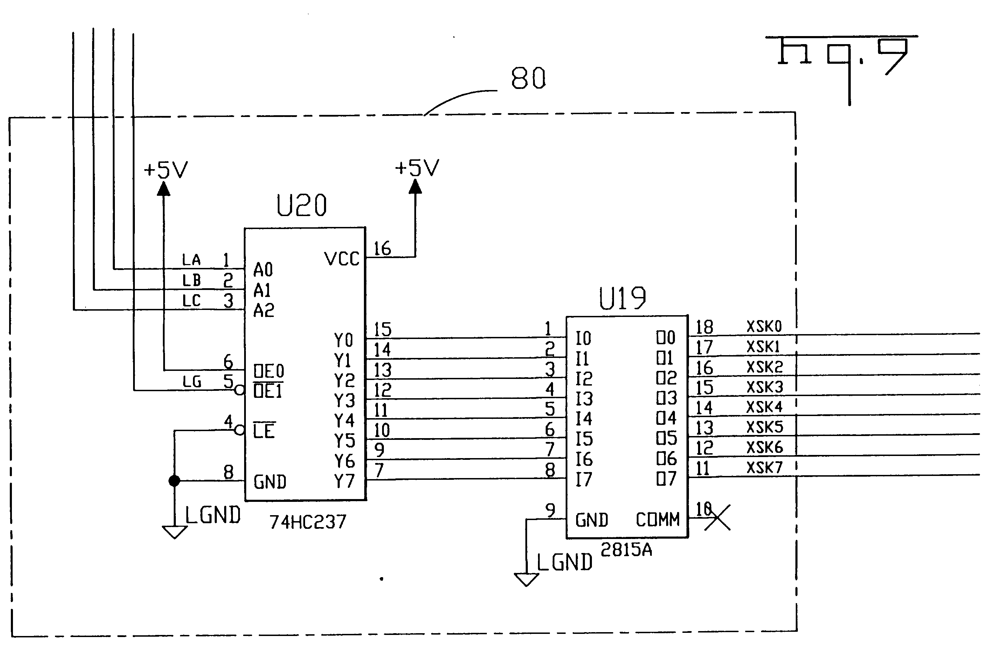

Figure 3 is a diagram illustrating the various principle portions of the light emitting element activation circuitry. Figures 4 through 9 contain detailed descriptions of the specific portions of the light emitter activation circuitry shown in Figure 3. Figure 3 shows that the light emitter activation circuitry is under the control of a controller 30 which can be in the form of a processor or other logic means used to control not only the light emitter elements but also the other elements of the touch input system. It should be understood that the controller 30 could be a part of the touch input device attached to the output display of a computer, or a portion of the logic in the computer itself could be employed to supply the logical control over the touch input elements. Three signals, MODE, LCLK, and LED\ are used to activate the various portions of the light emitter activation circuitry in a manner in which the individual light emitting elements X1-XN and Y1-YN can be individually addressed. A counter 40 is responsive to the MODE and LCLK signals from controller 30. Charge pump 50 is responsive to the LED\ signal from the controller 30. Counter 40 increments a source driver 60 and a sink driver 80 to address individual light emitting elements, such as light emitting diodes in the light emitter matrix 70. A five volt voltage source, augmented in a manner to be discussed subsequently by charge pump 50 supplies the current to drive the source driver 60, the individually addressable light emitters in the matrix 70 and the sink driver 80. The counter 40 and the source driver 60 and the sink driver 80 comprises sequential activation means providing individual sequential activation of each light emitting element X1-XN and Y1-YN. As shown in Figures 6, 7 and 8, the counter 40, the source driver 60 and the sink driver 80 comprise standard integrated circuit components. The counter 40 comprises a component designated U16 in Figure 6 which when the preferred embodiment comprises a conventional 74HC4040 twelve stage binary counter component configured in the manner shown in Figure 6. The source driver 60 comprises two conventional components U17 and U18 which comprise a 74LS145 one-of-ten decoder driver - open collector device and a 2580A eight channel high current source driver device configured in the manner shown in Figure 7. The sink driver 80 also comprises two components U20 and U19 which respectively comprise a 74HC237 three-to-eight decoder/demultiplexer component and a 2815A eight channel darlington driver component configured as shown in Figure 9.

The light emitting elements X1-XN and Y1-YN in Figure 8 contain rows and columns of light emitting diodes. The anode side of each row of light emitting diodes in matrix 70 is selectively addressable by one line emanating from the source driver 60. Each column in turn is selectively addressable from interconnection of each cathode by one line communicating with the sink driver 80. Since each light emitting diode X1-XN as shown in Figure 8, has a unique row and column address, each light emitting diode is individually addressable by the source driver 60 and the sink driver 80. Figure 8 shows only the X-array of light emitting diodes X1-XN. It should be understood, however, that a similar array of Y light emitting diodes would be employed in a touch input system having light emitting elements located along two axes as shown in Figure 2.

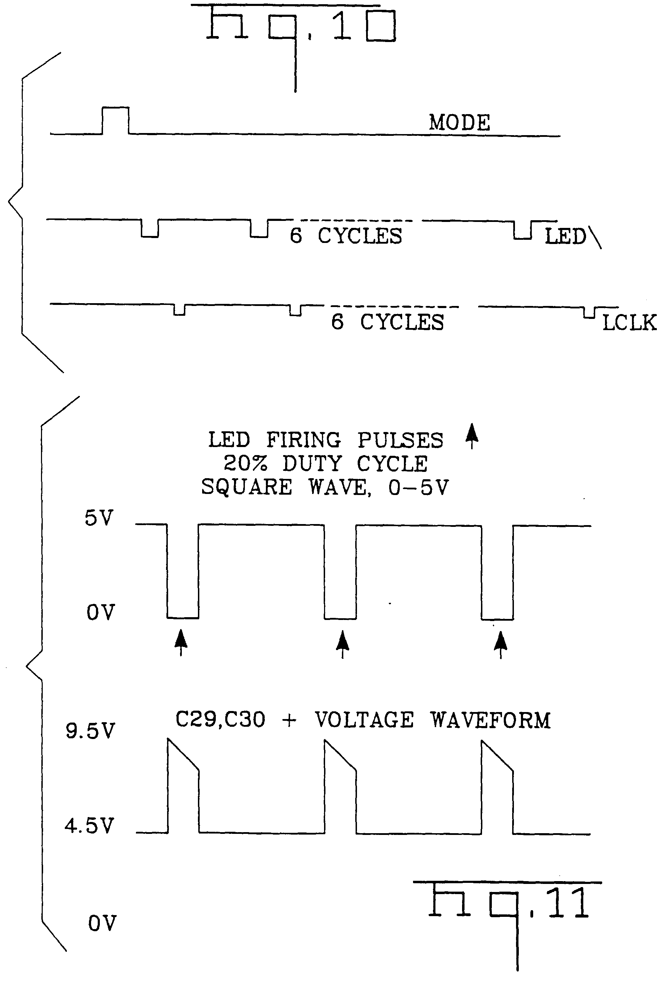

As shown in Figure 3, the charge pump portion 50 of the light emitter activation circuitry is specifically intended to sequentially boost or enhance the supply voltage provided by a voltage source. In the preferred embodiment of this invention this voltage source generates a five volt supply voltage which is suitable for activating the logic in this circuitry as well as in the light detection circuitry. The charge pump portion 50 of the light emitter activation circuitry is located between the voltage source and the source driver 60 which comprises a portion of the sequential activation means. As shown in Figure 5 this charge pump portion 50 includes a switching means comprising two transistors Q1 and Q2, each responsive to the LED\ signal emanating from the controller. In the preferred embodiment, Q1 is a P Channel Field effect transistor, and Q2 is an N Channel Field effect transistor. Note that the first transistor Q2 is conductive when LED\ is in one state whereas the second transistor Q1 is conductive when the LED\ signal is in another state. Transistors Q1 and Q2 thus comprise switch means used to switch the capacitors from a first state or charge mode to a second state or activating mode. In the activating mode the capacitors are precharged to approximately the supply voltage 5V, and are coupled additively in series with the supply voltage thus establishing the supply voltages as a 5V pedestal to the loop formed by the supply voltage, charged capacitors and load. The first transistor Q2 is connected through resistor R29 to the negative side of the parallel capacitors C29, C30. The positive side of these parallel capacitors C29, C30 is in turn connected to the five volt voltage source through a diode CRS. When the transistor Q2 is conductive, the voltage substantially equal to the five volt voltage supply is established on the positive side of the parallel capacitors C29, C30. This comprises the charge mode of the charge pump portion 50. First transistor Q2 connected between the negative side of the capacitors C29, C30 and ground is close circuited during the interval between activation of sequentially activated light emitting elements to establish the first voltage, substantially equal to the five volt supply voltage at the positive side of the capacitor. This first transistor Q2 is open circuited when each light emitting element X1-XN is sequentially activated. The second transistor Q1 is connected between the voltage source and the negative side of the capacitor C29, C30. The second transistor Q1 is close circuited when each light emitting element is activated to establish the supply voltage as a pedestal voltage on the negative side of the capacitor. Note that in the activating mode, the second transistor Q1 is conductive, and the diode CR5 of the capacitors C29, C30 is reverse biased and not conductive. During the activating mode in which transistor Q1 is activated, the voltage on the positive side of capacitors C29, C30 (which exceeds the voltage supplied by the five volt power supply) is delivered through resistor R31 to source drive component U18. Figure 11 shows a typical variation in the voltage on the positive side of the capacitors C29, C30 during sequential activation cycles of the light emitting circuitry by a supply voltage of five volts. Note that the voltage on the positive side of capacitors C29, C30 exceeds the supply voltage of five volts during the interval in which one of the light emitting diodes X1-XN is activated. Resistor R31 comprises a current limiting resistor and can be used in this circuitry to establish a generally constant current through the source driver U18, the activated light emitting diode X1-XN and the sink driver component U19. Use of the charge pump portion 50 in this manner ensures that each light emitting element X1-XN emits an amount of light exceeding a minimum threshold. This minimum threshold is sufficient to ensure that light which is not blocked by an opaque element, such as the operator's finger 18, striking a corresponding light detecting element will have enough strength to be detected by the respective light detecting element or phototransistor.

Referring to Figures 3 through 11, the operational sequence of the light emitter drive or activation circuitry is as follows. The initial state of the touch input system is indeterminate. The system is initialized by setting the MODE signal and the LED\ signal. Setting the MODE signal resets the counter U16 to all zeroes. The LED\ signal initially turns off all of the LEDs. The MODE signal is then released while the LED\ signal remains asserted. The effect of these actions sets U17 to 8, turns on driver 0 of U19, since U17 is set to an unused pin, U18 is not driven and therefore none of the LEDs are turned on. The charge pump is controlled by the LED\ signal and is set with Q1 turned off and Q2 turned on charging the capacitors C29 and C30, which in the preferred embodiment of this invention comprises two 47 microfarad capacitors, through diode CR5 and resistor R29. The first LED X1 is turned on by clearing LED\. This changes U17 from output 8 to 0, which through the first source driver of U18, applies voltage from the charge pump 50 to the top row of LED anodes. The other effect of clearing LED\ switches the voltage at the charge pump. With LED\ low, Q2 turns off and Q1 turns on, connecting the negative side of the C29, C30 capacitor to the +5 volts supplied as the supply voltage through Q1. The positive end of C29, C30 is now elevated to approximately 9 volts which is applied as the supply voltage to U18 through resistor R31. Diode CR5 is now reverse biased since the positive end of C29, C30 is greater than 5 volts.

The LED is turned off by re-asserting LED\ changing U17 back to output 8. This also returns the charge pump to the charge mode.

Next light emitting element X2, is addressed by toggling LCLK which increments U16 in this case from 0000000 to 0000001. With signal LA now equal to 1, U20 selects a Y1 which through U19 provides a near ground current source to the cathodes of the light emitting elements in the second column in the matrix 70.

Again, by clearing LED\, the first voltage driver of U18 applies the charge pump's voltage to the top row of the LED anodes. This matrix address turns on light emitting element X2. The LED\ signal is asserted once again to turn off this LED. This process continues for six more cycles sequencing through all of the LEDs in the first row.

Toggling LCLK one more time causes U16 to increment to 0001000. when the LED\ signal is low, this will now address U17 output 1 selecting (through U18) the second row. Note that the column address (U20, U19) returns to 000 mapping to the first light emitting element in the second row of the matrix.

After incrementing U16 through the X-LED matrix, the count goes from 0111111 (63) to 1000000 which is the appropriate address for the LED Y1 located in the Y array of light emitting elements. The sequence is essentially the same except that now X row cathode drivers U20 and U19 are disabled since LG is high (this control input for U20 is active low). Corresponding component for the Y-LEDs is now active since its control input is active high.

Although the preferred embodiment of this invention is especially suitable for use with individually addressable light emitting elements, it should be understood that this manner of sequentially enhancing the voltage supplied to light emitting elements can be used with other configurations and addressing schemes for the light emitting elements. Also other light emitting elements besides the LEDs used in the preferred embodiment of this invention could be employed.

## Claims

1. A touch input device for detecting the presence of an opaque object (18) within an irradiated display area (12),
a) the device including a plurality of light emitting elements (X₁-X_{N}; Y₁-Y_{N}) individually aligned with a plurality of light detecting elements (X'₁-X'_{N}; Y'₁-Y'_{N}), light from each one of said light emitting elements being incident upon an associated one of said light detecting elements unless interrupted by the presence of an opaque object (18),
b) the device also including means for processing the detection of light or absence of light by said light detecting elements to determine and indicate the absence of or at least the presence and location of a said opaque object, respectively, and
c) further including a voltage source generating a first supply voltage and means (30, 40, 60, 80) for sequentially activating individual ones of said light emitting elements to generate light beams traversing said display area (12) and incident upon respective ones of said light detecting elements,
**characterized in that**
d) said device further includes a voltage enhancement means (50) between said voltage source and said sequential activation means (30),
e) wherein upon activation of one of said light emitting elements said voltage enhancement means enters a supply mode in which said voltage source is electrically connected in series with the negative side of a capacitor (C29, C30) of said voltage enhancement means (50), and
f) the positive side of said capacitor is connected in series with said activated light emitting element thereby applying a second supply voltage to said activated light emitting element which second supply voltage is generated from the addition of the first supply voltage and the voltage across the capacitor so that the second supply voltage on the positive side of said capacitor is greater than the first supply voltage of said voltage source during activation of each of said light emitting elements and
g) wherein during a time interval between activation of sequentially activated ones of said light emitting elements said voltage enhancement means (50) enters a charge mode for charging said capacitor,
h) thereby said voltage enhancement means alternates between said supply mode and said charge mode in synchronism with said sequential activation.

2. The touch input device of claim 1 further characterised in that said sequential activation means (30) comprises source driver means (60) and sink driver means (80), said light emitting elements being electrically connected therebetween in a matrix (70) so that each said light emitting element is individually addressable.

3. The touch input device (20) of any of claims 1 or 2 further characterised in that said voltage enhancement means (50) comprises charge pump means (50) including switch meansLconnected between said voltage source and said capacitor, said switch means being switchable between a first state during the interval between activation of said sequentially activated light emitting elements for charging said capacitor (C29,C30) and a second state during activation of each said light emitting element wherein said capacitor is partially discharged.

4. The touch input device of any of claims 1 to 3 further characterised in that said voltage enhancement means (50) comprises said capacitor, a first transistor (Q2) and a second transistor (Q1), and a diode (CR5), said second transistor being connected between said voltage source and said negative side of said capacitor, said first transistor being connected between ground and said negative side of said capacitor, and said diode being connected between said voltage source and said positive side of said capacitor.

5. The touch input device of claim 4 further characterised in that said first transistor (Q2) is close circuited during the interval between activation of said sequentially activated light emitting elements to establish a first voltage at the positive side of said capacitor, and said first transistor is open circuited and said second transistor (Q1) is close circuited when each said light emitting element is activated to establish said second supply voltage on the positive side of said capacitor.

6. The touch input device of any of claims 1 to 5 further characterised in that said means (30) for sequentially activating said light emitting elements includes a microprocessor responsive to said first supply voltage and supplying activating signals to said light emitting elements and to said voltage enhancement means (50), and said means (30) for sequentially activating said light emitting elements comprises a source driver means (60) and a sink driver means (80) controlled by said microprocessor.

7. The touch input device of claim 6 further characterised in that said first supply voltage is five volts and the second supply voltage provided to a said light emitting element from said voltage source and said voltage enhancement means (50) in series therewith during activation thereof is greater than five volts.

8. The touch input device of any of claims 1 to 7 further characterised in that said activation means (30) generates a first signal (LCLK) and a second signal (LEDl), said first signal selecting an individual light emitting element, said selected light emitting elements being activatable by changes in said second signal, and said voltage enhancement means (50) being switched from said charge mode to said supply mode by changes in said second signal and thereby being synchronous therewith.

9. The touch input device of claim 8 further characterised in that said source driver means (60) is selectively connected to said light emitting elements in a plurality of rows and said sink driver means (80) is selectively connected to light emitting elements in a plurality of columns, said rows and columns forming a matrix (70) in which each individual light emitting element is selectively addressable.

## Patentansprüche

1. Tasteingabevorrichtung zum Nachweisen des Vorhandenseins eines opaken Gegenstands (18) in einem bestrahlten Anzeigebereich (12),
a) wobei die Vorrichtung mehrere Lichtabstrahlelemente (X₁-X_{N}; Y₁-Y_{N}) aufweist, die individuell mit mehreren Lichtdetektierelementen (X'₁-X'_{N}; Y'₁-Y'_{N}) ausgerichtet sind, wobei Licht von jedem einzelnen Lichtabstrahlelement auf ein zugehöriges Lichtdetektierelement fällt, falls es nicht durch das Vorhandensein eines opaken Gegenstands (18) abgehalten wird;
b) wobei die Vorrichtung außerdem eine Einrichtung enthält zum Verarbeiten des Nachweises von Licht oder fehlendem Licht durch die Lichtdetektierelemente, um das Fehlen des opaken Objekts bzw. zumindest das Vorhandensein und die Stelle des opaken Objekts festzustellen und anzuzeigen; und
c) außerdem enthaltend eine Spannungsquelle zum Erzeugen einer ersten Versorgungsspannung und eine Einrichtung (30, 40, 60, 80) zum sequentiellen Aktivieren individueller Lichtabstrahlelemente, um Lichtstrahlen zu erzeugen, welche den Anzeigebereich (12) queren und auf zugehörige Lichtdetektierelemente auftreffen,
**dadurch gekennzeichnet**, daß
d) die Vorrichtung außerdem eine Spannungserhöhungseinrichtung (50) zwischen der Spannungsquelle und der Einrichtung (30) zum sequentiellen Aktivieren enthält,
e) wobei auf das Aktivieren eines der Lichtabstrahlelemente hin die Spannungserhöhungseinrichtung in eine Speisebetriebsart eintritt, in der die Spannungsquelle elektrisch in Serie an die negative Seite eines Kondensators (C29, C30) der Spannungserhöhungseinrichtung (50) angeschlossen ist, und
f) die positive Seite des Kondensators in Reihe zu dem aktivierten Lichtabstrahlelement geschaltet ist, um dadurch an das aktivierte Lichtabstrahlelement eine zweite Versorgungsspannung anzulegen, welche erzeugt wird durch das Addieren der ersten Versorgungsspannung und der an dem Kondensator anstehenden Spannung, so daß die zweite Versorgungsspannung an der positiven Seite des Kondensators höher ist als die erste Versorgungsspannung der Spannungsquelle, während jedes der Lichtabstrahlelemente aktiviert wird, und
g) wobei während eines Zeitintervalls zwischen dem Aktivieren von sequentiell aktivierten Lichtabstrahlelementen die Spannungserhöhungseinrichtung (50) in eine Aufladebetriebsart gelangt, um den Kondensator aufzuladen,
h) wodurch die Spannungserhöhungseinrichtung wechselt zwischen der Versorgungsbetriebsart und der Aufladebetriebsart, synchron mit dem sequentiellen Aktivieren.

2. Tasteingabevorrichtung nach Anspruch 1,
**dadurch gekennzeichnet**, daß die Einrichtung (30) zum sequentiellen Aktivieren eine Quellentreibereinrichtung (60) und eine Senkentreibereinrichtung (80) aufweist, wobei dazwischen die Lichtabstrahlelemente in Form einer Matrix (70) geschaltet sind, so daß jedes Lichtabstrahlelement individuell adressierbar ist.

3. Tasteingabevorrichtung (20) nach Anspruch 1 oder 2,
**dadurch gekennzeichnet**, daß die Spannungserhöhungseinrichtung (50) eine Ladungspumpeinrichtung (50) enthält, die eine Schaltereinrichtung (Q1, Q2) aufweist, welche zwischen die Spannungsquelle und den Kondensator gelegt ist, wobei die Schaltereinrichtung umschaltbar ist zwischen einem ersten Zustand während des Intervalls zwischen dem Aktivieren der sequentiell aktivierten Lichtabstrahleinrichtungen, um den Kondensator (C29, C30) aufzuladen, und einem zweiten Zustand während der Aktivierung jedes Lichtabstrahlelements, wodurch der Kondensator teilweise entladen wird.

4. Tasteingabevorrichtung nach einem der Ansprüche 1 bis 3,
**dadurch gekennzeichnet**, daß die Spannungserhöhungseinrichtung (50) den Kondensator, einen ersten Transistor (Q2) und einen zweiten Transistor (Q1) sowie eine Diode (CR5) aufweist, von denen der zweite Transistor zwischen die Spannungsquelle und die negative Seite des Kondensators geschaltet ist, der erste Transistor zwischen Masse und die negative Seite des Kondensators geschaltet ist, und die Diode zwischen der Spannungsquelle und der positiven Seite des Kondensators liegt.

5. Tasteingabevorrichtung nach Anspruch 4,
**dadurch gekennzeichnet**, daß der erste Transistor (Q2) während der Zeitspanne zwischen dem Aktivieren der sequentiell aktivierten Lichtabstrahlelemente geschlossen wird, um an der positiven Seite des Kondensators eine erste Spannung zu bilden, und der erste Transistor geöffnet und der zweite Transistor (Q1) geschlossen wird, wenn jedes Lichtabstrahlelement aktiviert wird, um die zweite Versorgungsspannung an der positiven Seite des Kondensators zu bilden.

6. Tasteingabevorrichtung nach einem der Ansprüche 1 bis 5,
**dadurch gekennzeichnet**, daß die Einrichtung (30) zum sequentiellen Aktivieren der Lichtabstrahlelemente einen Mikroprozessor enthält, der auf die erste Versorgungsspannung anspricht und an die Lichtabstrahlelemente und die Spannungserhöhungseinrichtung (50) Aktivierungssignale liefert, und die Einrichtung (30) zum sequentiellen Aktivieren der Lichtabstrahlelemente eine Quellentreibereinrichtung (60) und eine Senkentreibereinrichtung (80) aufweist, die von dem Mikroprozessor gesteuert werden.

7. Tasteingabevorrichtung nach Anspruch 6,
**dadurch gekennzeichnet**, daß die erste Versorgungsspannung fünf Volt beträgt und die zweite Versorgungsspannung, die von der Spannungsquelle und der damit in Reihe angeordneten Spannungserhöhungseinrichtung (50) an das Lichtabstrahlelement während dessen Aktivierung geliefert wird, mehr als fünf Volt beträgt.

8. Tasteingabevorrichtung nach einem der Ansprüche 1 bis 7,
**dadurch gekennzeichnet**, daß die Aktivierungseinrichtung (30) ein erstes Signal (LCLK) und ein zweites Signal (LED\) erzeugt, das erste Signal ein individuelles Lichtabstrahlelement auswählt, die ausgewählten Lichtabstrahlelemente aktivierbar sind durch Änderungen in dem zweiten Signal, und die Spannungserhöhungseinrichtung (50) durch Änderungen des zweiten Signals von der Aufladebetriebsart in die Versorgungsbetriebsart umgeschaltet wird, und dadurch mit jenem synchron ist.

9. Tasteingabevorrichtung nach Anspruch 8,
**dadurch gekennzeichnet**, daß die Quellentreibereinrichtung (60) in mehreren Reihen selektiv an die Lichtabstrahlelemente angeschaltet wird und die Senkentreibereinrichtung (80) selektiv an Lichtabstrahlelemente in mehreren Spalten angeschlossen wird, wobei die Reihen und die Spalten eine Matrix (70) bilden, in welcher jedes einzelne Lichtabstrahlelement selektiv adressierbar ist.

## Revendications

1. Dispositif d'entrée tactile pour détecter la présence d'un objet opaque (18) dans une zone (12) d'affichage irradiée,
a) le dispositif comportant une pluralité d'éléments (X₁ - X_{N}; Y₁ - Y_{N}) d'émission de lumière alignés individuellement avec une pluralité d'éléments (X'₁ - X'_{N}; Y'₁ - Y'_{N}) de détection de lumière, la lumière provenant de chacun desdits éléments d'émission de lumière venant tomber sur un élément associé desdits éléments de détection de lumière, à moins qu'elle soit interrompue par la présence d'un objet opaque (18),
b) le dispositif comportant aussi un moyen pour traiter la détection de lumière ou l'absence de lumière par lesdits éléments de détection de lumière afin de déterminer et d'indiquer l'absence, ou au moins la présence et l'emplacement, dudit objet opaque, respectivement, et
c) comportant en outre une source de tension générant une première tension d'alimentation et des moyens (30, 40, 60, 80) pour activer séquentiellement des éléments individuels desdits éléments d'émission de lumière pour générer des faisceaux lumineux traversant ladite zone (12) d'affichage et venant tomber sur des éléments respectifs desdits éléments de détection de lumière,
**caractérisé en ce que**
d) ledit dispositif comporte en outre un moyen (50) de renforcement de tension entre ladite source de tension et ledit moyen (30) d'activation séquentielle,
e) dans lequel, lors de l'activation de l'un desdits éléments d'émission de lumière, ledit moyen de renforcement de tension entre dans un mode d'alimentation dans lequel ladite source de tension est connectée électriquement en série avec le côté négatif d'un condensateur (C29, C30) dudit moyen (50) de renforcement de tension, et
f) le côté positif dudit condensateur est connecté en série avec ledit élément d'émission de lumière activé, afin d'appliquer une seconde tension d'alimentation audit élément d'émission de lumière activé, cette seconde tension d'alimentation étant générée à partir de l'addition de la première tension d'alimentation et de la tension aux bornes du condensateur, de telle sorte que la seconde tension d'alimentation du côté positif dudit condensateur est supérieure à la première tension d'alimentation de ladite source de tension au cours de l'activation de chacun desdits éléments d'émission de lumière, et
g) dans lequel, au cours d'un intervalle de temps entre les activations des éléments activés séquentiellement desdits éléments d'émission de lumière, ledit moyen (50) de renforcement de tension entre dans un mode de charge pour charger ledit condensateur,
h) grâce à quoi le moyen de renforcement de tension alterne entre ledit mode d'alimentation et ledit mode de charge, en synchronisme avec ladite activation séquentielle.

2. Dispositif d'entrée tactile selon la revendication 1, caractérisé en outre en ce que ledit moyen (30) d'activation séquentielle comprend un moyen (60) formant dispositif d'excitation de source et un moyen (80) formant dispositif d'excitation de récepteur de courant, lesdits éléments d'émission de lumière étant connectés électriquement entre eux selon une matrice (70), de telle sorte que chacun desdits éléments d'émission de lumière est adressable individuellement.

3. Dispositif (20) d'entrée tactile selon l'une quelconque des revendications 1 ou 2, caractérisé en outre en ce que ledit moyen (50) de renforcement de tension comprend un moyen (50) de pompage de charge incluant des moyens (Q1, Q2) formant commutateurs connectés entre ladite source de tension et ledit condensateur, lesdits moyens formant commutateurs étant commutables entre un premier état au cours de l'intervalle entre les activations desdits éléments d'émission de lumière activés séquentiellement pour charger ledit condensateur (29, 30) et un second état au cours de l'activation de chacun desdits éléments d'émission de lumière, dans lequel ledit condensateur est partiellement déchargé.

4. Dispositif d'entrée tactile selon l'une quelconque des revendications 1 à 3, caractérisé en outre en ce que ledit moyen (50) de renforcement de tension comprend ledit condensateur, un premier transistor (Q2) et un second transistor (Q1), et une diode (CR5), ledit second transistor étant connecté entre ladite source de tension et ledit côté négatif dudit condensateur, ledit premier transistor étant connecté entre la masse et ledit côté négatif dudit condensateur, et ladite diode étant connectée entre ladite source de tension et ledit côté positif dudit condensateur.

5. Dispositif d'entrée tactile selon la revendication 4, caractérisé en outre en ce que ledit premier transistor (Q2) est en circuit fermé au cours de l'intervalle entre les activations desdits éléments d'émission de lumière activés séquentiellement pour établir une première tension du côté positif dudit condensateur, et ledit premier transistor est en circuit ouvert et ledit second transistor (Q1) est en circuit fermé lorsque chacun desdits éléments d'émission de lumière est activé pour établir ladite seconde tension d'alimentation du côté positif dudit condensateur.

6. Dispositif d'entrée tactile selon l'une quelconque des revendications 1 à 5, caractérisé en outre en ce que ledit moyen (30) pour activer séquentiellement lesdits éléments d'émission de lumière comporte un microprocesseur sensible à ladite première tension d'alimentation et appliquant des signaux d'activation auxdits éléments d'émission de lumière et audit moyen (50) de renforcement de tension, et ledit moyen (30) pour activer séquentiellement lesdits éléments d'émission de lumière comprend un moyen (60) formant dispositif d'excitation de source et un moyen (80) formant dispositif d'excitation de récepteur de courant, commandés par ledit microprocesseur.

7. Dispositif d'entrée tactile selon la revendication 6, caractérisé en outre en ce que ladite première tension d'alimentation est de cinq volts et la seconde tension d'alimentation, fournie à un desdits éléments d'émission de lumière par ladite source de tension et ledit moyen (50) de renforcement de tension en série avec celle-ci au cours de son activation, est supérieure à cinq volts.

8. Dispositif d'entrée tactile selon l'une quelconque des revendications 1 à 7, caractérisé en outre en ce que ledit moyen d'activation (30) génère un premier signal (LCLK) et un second signal (LED\), ledit premier signal sélectionnant un élément individuel d'émission de lumière, lesdits éléments sélectionnés d'émission de lumière étant activables par des changements dudit second signal, et ledit moyen (50) de renforcement de tension étant commuté entre ledit mode de charge et ledit mode d'alimentation par des changements dudit second signal et étant, de ce fait, synchrone avec celui-ci.

9. Dispositif d'entrée tactile selon la revendication 8, caractérisé en outre en ce que ledit moyen (60) formant dispositif d'excitation de source est connecté sélectivement auxdits éléments d'émission de lumière dans une pluralité de rangées et ledit moyen (80) formant dispositif d'excitation de récepteur de courant est connecté sélectivement aux éléments d'émission de lumière dans une pluralité de colonnes, lesdites rangées et colonnes formant une matrice (70) dans laquelle chaque élément d'émission de lumière individuel est adressable sélectivement.
